# EUROPÄISCHE PATENTSCHRIFT

(11) **EP 2 670 959 B1**
(45) Veröffentlichungstag und Bekanntmachung des Hinweises auf die Patenterteilung: **14.09.2016**
(21) Anmeldenummer: 12703284.5
(22) Anmeldetag: 02.02.2012
(51) Int. Cl.: F01N 3/20

(54) **HARNSTOFFFILTERMATERIAL**
UREA FILTER MATERIAL
MATÉRIAU DE FILTRATION D'URÉE

(30) Priorität: 03.02.2011 DE 102011003585
(43) Veröffentlichungstag der Anmeldung: 11.12.2013
(73) Patentinhaber: Mahle International GmbH, 70376 Stuttgart (DE); Carl Freudenberg KG, 69469 Weinheim (DE)
(72) Erfinder: JAUSS, Stefan, 73072 Donzdorf (DE); SIEGLE, Sven, 71364 Winnenden (DE); LEUBNER, Holger, 03055 Cottbus (DE); ARNOLD, Anette, 69198 Schriesheim (DE); KÜHLWEIN, Thomas, 67229 Laumersheim (DE)
(74) Vertreter: BRP Renaud & Partner mbB Rechtsanwälte Patentanwälte Steuerberater
(86) Internationale Anmeldenummer: PCT/EP2012/051772
(87) Internationale Veröffentlichungsnummer: WO 2012/104379

(56) Entgegenhaltungen:
- EP-A1- 1 402 933
- WO-A1-2010/007053
- US-A- 5 980 616
- US-A1- 2003 226 792
- US-A1- 2008 149 561

## Beschreibung

Die vorliegende Erfindung betrifft ein Harnstofffiltermaterial für ein Harnstofffilter sowie ein Harnstofffilterelement mit einem derartigen Harnstofffiltermaterial.

Harnstoff wird in modernen Kraftfahrzeugen zur Reduktion von Stickoxiden im Abgas des Verbrennungsmotors verwendet, wobei hier zunehmend das sogenannte SCR-Verfahren (selektive katalytische Reduktion) Anwendung findet. Beim SCR-Verfahren wird Harnstoff in den heißen Abgasstrom eingespritzt und zersetzt sich zu Ammoniak, das in einem nachgeschalteten Katalysator die Stickoxide reduziert. Derartig in das Abgas eingespritzter Harnstoff begünstigt somit insgesamt das Emissionsverhalten des Kraftfahrzeuges. Generell wird dabei der Harnstoff in Kraftfahrzeugen vor der Verwendung, das heißt vor dem Einspritzen in den Abgasstrom, gefiltert, wozu Harnstofffilter verwendet werden. Nachteilig bei bekannten Harnstofffiltern ist, dass diese aufgrund des vom Harnstoff erzeugen aggressiven Milieus nur bedingt haltbar sind.

Aus der US 2008/014561 A1 ist ein Harnstofffiltermaterial für ein Harnstofffilter mit drei Schichten, nämlich einer Tragschicht, einer Abdeckschicht und einer dazwischen liegenden Filterschicht bekannt, wobei sämtliche Schichten aus Polypropylenvlies ausgebildet sind.

Aus der WO 2010/007053 A1 ist ein weiteres Harnstofffilter bekannt.

Die vorliegende Erfindung beschäftigt sich mit dem Problem, für ein Harnstofffiltermaterial eine verbesserte Ausführungsform anzugeben, die sich insbesondere durch eine verlängerte Standzeit auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein Harnstofffiltermaterial in einem Harnstofffilter zu verwenden und dreilagig auszubilden, das heißt mit drei Schichten, nämlich einer Tragschicht, einer Abdeckschicht und einer dazwischen liegenden Filterschicht, wobei sämtliche Schichten des Harnstofffiltermaterials aus Polypropylen, insbesondere als Polypropylenvlies, ausgebildet sind. Polypropylen ist ein teilkristalliner Thermoplast und gehört zu der Gruppe der Polyolefine. Polypropylen ist dabei bei Raumtemperatur gegenüber fast allen gängigen Lösungsmitteln und Chemikalien beständig, wodurch das ausschließlich aus Polypropylenvlies hergestellte Harnstofffiltermaterial die gewünschte lange Standzeit aufweist. Durch den dreischichtigen Aufbau des erfindungsgemäßen Harnstofffiltermaterials kann zudem ein besonders widerstandsfähiges Filtermaterial gewonnen werden, welches neben hohen chemischen auch hohen mechanischen Belastungen, hervorgerufen durch die Durchströmung des Harnstofffiltermaterials während des Betriebs, stand hält. Gleichzeitig weist das erfindungsgemäße Harnstofffiltermaterial auch eine hohe Beständigkeit gegenüber einer sogenannten Einfrierquellung auf. Unter Einfrierquellung ist die Anomalie des Wassers gemeint sein Volumen beim Gefrieren zu vergrößern. UREA besteht aus ca. 70% Wasser. In einem Harnstofffilter verbleiben immer eine gewisse Menge an Harnstofflösung, diese dehnt sich aufgrund ihres Wasseranteiles beim Einfrieren aus. Ein geeignetes Harnstofffiltermaterial sollte diese Quellung dauerhaft widerstehen.

Bei einer vorteilhaften Weiterbildung der erfindungsgemäßen Lösung, sind die Tragschicht und die Filterschicht miteinander verschweißt, insbesondere mittels Ultraschall miteinander verschweißt, wogegen die Filterschicht und die Abdeckschicht miteinander verprägt, insbesondere mittels thermischem Walzen miteinander verbunden sind. Durch das Ultraschallschweißen kann ein einfaches und zugleich dauerhaftes Verbinden der Filterschicht und der Tragschicht erreicht werden, wobei die beiden Schichten vorzugsweise lediglich an bestimmten Berührungspunkten miteinander verschweißt werden. Die Tragschicht, beispielsweise auch Stützvlies genannt, kann anschließend mittels thermisch beheizter Walzen mit der Filterschicht verprägt werden. Die zuvor genannten Verfahren belegen dabei bereits, dass das erfindungsgemäße Filtermaterial fertigungstechnisch rationell und dadurch kostengünstig herstellbar ist. Selbstverständlich sind anstelle des Verschweißens bzw. Verprägens auch andere geeignete Verbindungsverfahren, wie beispielsweise ein Vernadeln, Verfilzen, Verschmelzen oder Verkleben denkbar, wobei die einzelnen Verbindungsverfahren stets in Abhängigkeit der Struktur der einzelnen Schichten des Harnstofffiltermaterials gewählt werden sollten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Harnstofffiltermaterial,
- Fig. 2: eine mögliche Ausführungsform eines Harnstofffilterelementes mit dem erfindungsgemäßen Harnstofffiltermaterial.

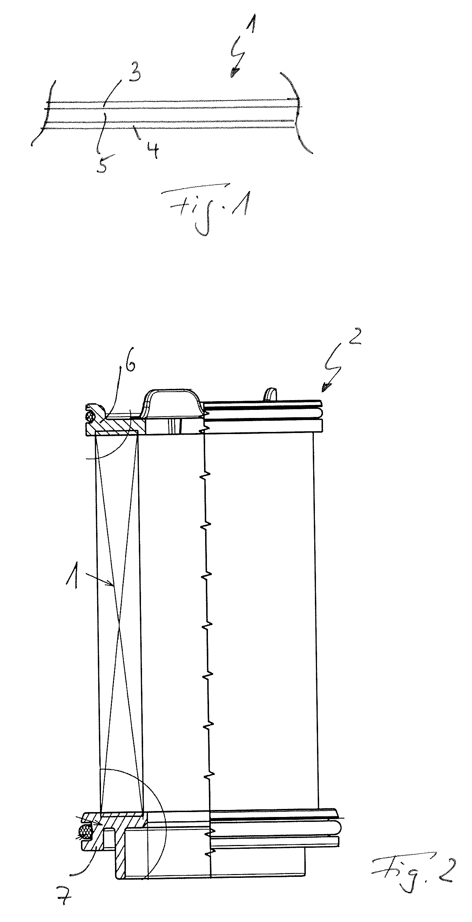

Entsprechend der Fig. 1, weist ein Harnstofffiltermaterial 1 für ein gemäß der Fig. 2 dargestelltes Harnstofffilterelement 2 drei Schichten, nämlich eine Tragschicht 3, eine Abdeckschicht 4 sowie eine dazwischen liegende Filterschicht 5 auf. Sämtliche dieser genannten Schichten 3, 4, 5 sind dabei erfindungsgemäß aus Polypropylen, insbesondere aus einem Polypropylenvlies ausgebildet. Die Tragschicht 3 und die Filterschicht 5 sind dabei miteinander verschweißt, insbesondere mittels Ultraschallverfahren miteinander verschweißt, wobei eine z.B. auch lediglich punktuelle Festlegung der Tragschicht 3 an der Filterschicht 5 möglich ist. Demgegenüber sind die Filterschicht 5 und die Abdeckschicht 4 miteinander verprägt, insbesondere mittels beheizter Walzen miteinander verbunden. Selbstverständlich sind auch weitere Verbindungsverfahren, wie beispielsweise ein Verkleben, Vernadeln, Verfilzen, etc. denkbar. Man kann allerdings auch alle drei Schichten 3 bis 5 gleichzeitig verbinden (Ultraschall oder thermisch). Die gemäß der Fig. 1 gezeigten Dicken der einzelnen Schichten 3 bis 5, sind dabei lediglich rein exemplarisch zu verstehen, so dass es selbstverständlich möglich ist, dass die Filterschicht 5 dicker oder dünner als die Tragschicht 3 ist. Darüber hinaus können die einzelnen Schichten 3, 4 und 5 unterschiedliche Festigkeiten und/oder unterschiedliche Filtereigenschaften aufweisen. Die einzelnen das Vlies bildende Fasern der Schichten 3 bis 5 können dabei unterschiedliche Faserdicken und/oder unterschiedliche Faserlängen aufweisen. Die einzelnen Schichten können dabei als sogenannte Spinnvliesstoffe hergestellt werden und weisen eine hohe Beständigkeit gegenüber Chemikalien und Lösungen auf, wodurch sie insbesondere für das in einem Harnstofffilter herrschende aggressive Milieu besonders geeignet sind. Selbstverständlich sind dabei auch für die einzelnen Schichten 3 bis 5 unterschiedliche Herstellungsverfahren, wie beispielsweise das sogenannte "Melt-blown" denkbar. Beim sogenannten Melt-blown-Verfahren wird geschmolzener Kunststoff mittel Pressluft beaufschlagt und dadurch die eigentlichen Fasern gewonnen.

Die Tragschicht 3 besteht aus einem stabileren Polypropylenvlies, das vor allem die Stützfunktion für die Filterschicht 5 gewährleistet. Während die Filterschicht 5 aus einem voluminöseren Polypropylenvlies besteht um die gewünschte Filterwirkung mittels geeigneter Porengröße zu garantieren. Die Abdeckschicht 4 wiederum soll dafür sorgen, dass die weiche Filterschicht 5 nicht durch mechanische Reibung zerstört wird. Sie besteht daher aus einem vergleichsweise dünnen und glatten Polypropylenvlies.

Betrachtet man die Fig. 2, so kann man das erfindungsgemäße Harnstofffilterelement 2 erkennen, welches in der vorliegenden Form als Ringfilterelement ausgebildet ist. In diesem Fall ist das Harnstofffiltermaterial als Faltenstern gefaltet und in Radialrichtung durchströmt. Eine erste und eine zweite Endscheibe 6, 7 schließen dabei den Faltenstern in Axialrichtung ab, wobei die beiden Endscheiben 6, 7 ebenfalls aus Polypropylen ausgebildet sind. Die Stirnseiten des Faltensterns sind dabei mit den jeweiligen Endscheiben 6, 7 dicht verbunden, insbesondere verklebt oder verschmolzen. Die Endscheiben 6,7 werden je nach Anforderung an das Harnstofffilterelement 2 mit Dichtungen oder Öffnungen ausgestattet.

Generell weist das Harnstofffiltermaterial 1 eine ausgezeichnete Medienbeständigkeit auf, insbesondere gegenüber mechanischen Belastungen beim Einfrieren, bei welchem sich das Volumen vergrößert.

## Patentansprüche

1. Verwendung eines Harnstofffiltermaterials (1) mit drei Schichten (3,4,5), nämlich einer Tragschicht (3), einer Abdeckschicht (4) und einer dazwischen liegenden Filterschicht (5), wobei sämtliche Schichten (3,4,5) aus Polypropylenvlies ausgebildet sind, in einem Harnstofffilter.

2. Verwendung eines Harnstofffiltermaterials nach Anspruch 1,
**dadurch gekennzeichnet,**
**dass** zumindest die Tragschicht (3) und die Filterschicht (5) miteinander verschweißt, insbesondere mittels Ultraschall miteinander verschweißt, sind.

3. Verwendung eines Harnstofffiltermaterials nach Anspruch 1 oder 2,
**dadurch gekennzeichnet,**
**dass** zumindest die Filterschicht (5) und die Abdeckschicht (4) miteinander verprägt, insbesondere mittels thermischem Walzen miteinander verbunden sind.

4. Verwendung eines Harnstofffiltermaterials nach einem der Ansprüche 1 bis 3, **dadurch gekennzeichnet,**
**dass** die Schichten (3,4,5) unterschiedliche Dicken, Festigkeiten und/oder Filtereigenschaften aufweisen.

5. Verwendung eines Harnstofffiltermaterials nach einem der Ansprüche 1 bis 4, **dadurch gekennzeichnet,**
**dass** die Schichten (3,4,5) Fasern mit unterschiedlicher Faserdicke und/oder Faserlänge aufweisen.

## Claims

1. Use of an urea filter material (1) in an urea filter comprising three layers (3, 4, 5), namely a base layer (3), a cover layer (4) and a filter layer (5) lying therebetween, where all the layers (3, 4, 5) are formed from polypropylene non-woven fabric.

2. Use of an urea filter material according to claim 1, **characterised in that** at least the base layer (3) and the filter layer (5) are welded together, in particular welded together by means of ultrasound.

3. Use of an urea filter material according to claim 1 or 2, **characterised in that** at least the filter layer (5) and the cover layer (4) are stamped together, in particular joined together by means of thermal rolling.

4. Use of an urea filter material according to any one of claims 1 to 3, **characterised in that** the layers (3, 4, 5) have different thicknesses, strengths and/or filter properties.

5. Use of an urea filter material according to any one of claims 1 to 4, **characterised in that** the layers (3, 4, 5) comprise fibres having different fibre thickness and/or fibre length.

## Revendications

1. Utilisation d'un matériau de filtre à urée (1) comportant trois couches (3, 4, 5), à savoir une couche porteuse (3), une couche de recouvrement (4) et une couche de filtrage (5) intercalée entre celles-ci, dans laquelle toutes les couches (3, 4, 5) sont constituées d'un voile intissé en polypropylène, dans un filtre à urée.

2. Utilisation d'un matériau de filtre à urée selon la revendication 1, **caractérisée en ce que** au moins la couche porteuse (3) et la couche de filtrage (5) sont soudées l'une à l'autre, notamment au moyen d'une soudure par ultrasons.

3. Utilisation d'un matériau de filtre à urée selon la revendication 1 ou 2, **caractérisée en ce que** au moins la couche de filtrage (5) et la couche de recouvrement (4) sont estampées l'une avec l'autre, notamment sont reliées l'une à l'autre au moyen d'un laminage thermique.

4. Utilisation d'un matériau de filtre à urée selon une des revendications 1 à 3, **caractérisée en ce que** les couches (3, 4, 5) présentent des épaisseurs, rigidités et/ou propriétés de filtrage différentes.

5. Utilisation d'un matériau de filtre à urée selon une des revendications 1 à 4, **caractérisé en ce que** les couches (3, 4, 5) présentent des fibres avec une épaisseur de fibre et/ou longueur de fibre différente.
